# NEUE EUROPÄISCHE PATENTSCHRIFT

(11) **EP 1 523 872 B2**
(45) Veröffentlichungstag und Bekanntmachung des Hinweises auf die Entscheidung über den Einspruch: **22.02.2017**
(45) Hinweis auf die Patenterteilung: 25.09.2013
(21) Anmeldenummer: 04104952.9
(22) Anmeldetag: 08.10.2004
(51) Int. Cl.: A01B 73/00, A01B 63/00, A01D 41/127

(54) **Landwirtschaftliche Arbeitsmaschine**
Agricultural working machine
Machine de travail agricole

(30) Priorität: 16.10.2003 DE 10348090
(43) Veröffentlichungstag der Anmeldung: 20.04.2005
(73) Patentinhaber: Deere & Company, Moline, IL 61265 (US)
(72) Erfinder: Laufer, Gerd, 66894, Martinshöhe (DE); Belz, Horst, 66482, Zweibrücken (DE)
(74) Vertreter: Holst, Sönke

(56) Entgegenhaltungen:
- EP-A- 0 631 906
- EP-A1- 0 631 906
- EP-A1- 1 405 555
- DE-A- 19 958 280
- DE-A1- 4 403 893
- DE-A1- 4 428 824
- DE-A1- 10 036 631
- DE-A1- 19 921 697
- DE-A1- 19 958 280
- DE-T2- 69 408 024
- GB-A- 1 463 395
- GB-A- 1 463 395
- JP-A- H07 298 774
- JP-A- 2000 107 961
- US-A- 3 606 742
- US-A- 3 606 742
- US-A- 5 748 097
- US-A- 5 884 204
- US-A- 5 884 204
- US-A- 6 164 406
- US-B1- 6 202 756
- US-B1- 6 359 403
- Betriebsanleitung Selbstfahrende Feldhäcksler 7200,7300,7400 und 7500-OMZ93284, Ausgabe J2 - Copyright © 2002
- Betriebsanleitung CLAAS LEXION 460/450/440/430/420/410 CEBIS - Druckdatum 10.2001
- Betriebsanleitung Selbstfahrende Feldhäcksler 6650,6750,6850 und 6950-Copyright © 1997
- Bedienungsanleitung Selbstfahrende Feldhäcksler

## Beschreibung

Die Erfindung betrifft eine landwirtschaftliche Arbeitsmaschine nach dem Oberbegriff des Anspruchs 1.

Landwirtschaftliche Arbeitsmaschinen, wie Traktoren, Feldhäcksler, Mähdrescher, Baumwollpflükkerund dergleichen sind in der Regel zur Arbeit auf einem Feld und zum Transport auf einer Straße betreibbar. Viele dieser Arbeitsmaschinen (vgl. Betriebsanleitung Selbstfahrende Feldhäcksler 6650, 6750, 6850 und 6950, John Deere Werke Zweibrücken OMZ92565 Ausgabe K7 © 1997) weisen Bedienereingabeeinrichtungen auf, die in der Regel als so genannte Feld/Straßenbetriebsschalter oder Straßensicherheitsschalter ausgeführt sind. Diese Bedienereingabeeinrichtungen ermöglichen es, eine Arbeitsbetriebsart auszuwählen. Nur wenn die Arbeitsbetriebsart ausgewählt ist, können bestimmte, beim Arbeitsbetrieb auf dem Feld benötigte Einrichtungen der Arbeitsmaschine in Betrieb gesetzt werden, bei einem Mähdrescher beispielsweise der Entladeförderer in Drehung versetzt und das Entleerrohr ausgeschwenkt. Andererseits ermöglicht es die Bedienereingabeeinrichtung, eine Straßenbetriebsart auszuwählen. Nur in der Straßenbetriebsart können wiederum andere, nur im Straßenbetrieb benötigte Einrichtungen eingeschaltet werden, wie bestimmte Beleuchtungen. In der Straßenbetriebsart können die nur beim Arbeitsbetrieb benötigten Einrichtungen nicht eingeschaltet werden, während bei der Arbeitsbetriebsart die nur bei der Fahrt auf einer Straße benötigten Einrichtungen der Arbeitsmaschine nicht in Betrieb genommen werden können. Auf diese Weise werden Fehlbedienungen vermieden.

Will der Bediener nach der Beendigung der Arbeit auf einem Feld in die Straßenbetriebsart übergehen, muss er bei vielen Arten von Arbeitsmaschinen zuvor eine Arbeitseinrichtung aus der Betriebsposition in eine Außerbetriebsposition verbringen, indem er einen entsprechenden Schalter betätigt, woraufhin ein Aktor die Arbeitseinrichtung in die Außerbetriebsposition bewegt. So ist beispielsweise bei einem Mähdrescher das Entladerohr in die Stellung zu bringen, in der es sich entlang einer Seite des Mähdreschers erstreckt. Eine Fahrt auf einer Straße ist nunmehr gefahrlos möglich, während sie bei ausgeschwenktem Entladerohr nicht zulässig wäre.

Da bei den meisten Arbeitsmaschinen eine große Anzahl von Arbeitseinrichtungen in die Außerbetriebsposition zu verbringen ist, hat insbesondere ein unerfahrener Bediener oft Schwierigkeiten, alle Arbeitseinrichtungen ausfindig zu machen und in die richtige Stellung zu bringen, bevor er die Bedienereingabeeinrichtung veranlasst, in die Straßenbetriebsart überzugehen. Er muss möglicherweise eine Bedienungsanleitung zu Rate ziehen, was relativ zeitaufwändig ist. Außerdem besteht die Gefahr, dass er eine der Arbeitseinrichtungen vergisst und sie versehentlich in der Betriebsposition stehen lässt.

In der US 5 884 204 A wird eine landwirtschaftliche Maschine mit einem Arbeitsgerät beschrieben, das durch einen Aktor anhebbar ist. Der Aktor ist mit einer Steuerung verbunden, die wiederum mit einer Eingabeeinrichtung verbunden ist. Mit der Eingabeeinrichtung kann über die Steuerung und den Aktor die vertikale Position des Arbeitsgeräts verändert werden. Um bei einer Fahrt bei höherer Geschwindigkeit unerwünschte Schwingungen des Arbeitsgeräts zu vermeiden, kann die Steuerung prüfen, ob sich das Arbeitsgerät in einer für eine Straßenfahrt geeigneten, angehobenen Stellung befindet. Sind diese Bedingungen erfüllt und die Geschwindigkeit größer als ein Mindestwert, wird in einen so genannten Straßenmodus übergegangen, in dem geprüft wird, ob die unerwünschten Schwingungen des Arbeitsgeräts tatsächlich auftreten und ggf. der Aktor zum Absenken des Arbeitsgeräts angesteuert wird, um die Schwingungen zu unterbinden.

Die der Erfindung zu Grunde liegende Aufgabe wird darin gesehen, die genannten Nachteile zu vermeiden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Steuerung ist mit der Bedienereingabeeinrichtung verbunden. Der Steuerung wird außerdem eine Information über die Position der Arbeitseinrichtung zugeführt. Veranlasst der Bediener durch Betätigung der Bedienereingabeeinrichtung einen Übergang von der Arbeitsbetriebsart in die Straßenbetriebsart, überprüft die Steuerung, ob sich die Arbeitseinrichtung in der Außerbetriebsposition befindet. Abhängig vom Ergebnis des Vergleichs wird ein Signalwert erzeugt.

Anhand des Signalwerts besteht die Möglichkeit, den zum Bewegen der Arbeitseinrichtung vorgesehenen Aktor selbsttätig anzusteuern und zu veranlassen, die Arbeitseinrichtung in die Außerbetriebsstellung zu verbringen, falls mit der Bedienereingabeeinrichtung ein Übergang von der Straßenbetriebsart in die Arbeitsbetriebsart ausgewählt wird und sich die Arbeitseinrichtung noch nicht in der Außerbetriebsposition befindet. Alternativ oder zusätzlich wird dem Bediener eine entsprechende Information gegeben, so dass er eine Rückstellung der Arbeitseinrichtung veranlassen kann.

Auf diese Weise gelangt die Arbeitseinrichtung automatisch oder durch Bedienereinwirkung in die bei der Straßenfahrt einzunehmende Außerbetriebsposition. Die Arbeit des Bedieners ist wesentlich erleichtert, die Fehlerwahrscheinlichkeit ist vermindert und die Sicherheit auf der Straße wird gewährleistet.

Die Erfindung kann insbesondere bei selbstfahrenden Erntemaschinen wie Mähdreschern, Feldhäckslern und Ballenpressen Anwendung finden. Bei diesen Maschinen ist das Arbeitselement vorzugsweise zur Handhabung von Erntegut, d. h. zum Aufnehmen, Transportieren oder Bearbeiten des Ernteguts eingerichtet, d. h. es handelt sich dann nicht um Mittel zum Vortrieb der Arbeitsmaschine.

Bei einem Mähdrescher kann mit der Bedienereingabeeinrichtung ein Aktor angesteuert werden, der das Entladerohr, die Korntankabdeckung, eine Radanordnung, die zur Arbeit an einem Hang verstellbar ist, und/oder die in eine Außerbetriebsposition bewegbaren Elemente eines Erntevorsatzes bewegt. Eine oder mehrere der genannten Arbeitseinrichtungen werden somit selbsttätig oder manuell in die Außerbetriebsposition verstellt, sobald der Bediener mit der Bedienereingabeeinrichtung die Straßenbetriebsart auswählt.

Analog können bei einem Feldhäcksler die um die Hochachse drehbare und in der Neigung verstellbare, stromab der Häckseleinrichtung angeordnete Austrageinrichtung und/oder die zum Straßentransport in eine Außerbetriebsposition bewegbaren Elemente eines Erntevorsatzes bewegt werden.

Die Erfindung kann auch an Traktoren mit daran angebrachten Bodenbearbeitungswerkzeugen oder Geräten zum Ausbringen von Material, wie Sämaschinen, Düngerstreuern oder Sprühgeräten Verwendung finden, die ggf. in die Außerbetriebsposition verbracht werden.

In manchen Fällen ist es nicht sinnvoll, die Arbeitseinrichtung in die Außerbetriebsstellung zu verbringen. So ist es bei einem vollständig gefüllten Korntank nicht möglich, die Korntankabdeckung zu schließen, da dann der Aktor, die Korntankabdeckung oder der Korntank selbst beschädigt wird. Es bietet sich daher an, einen entsprechenden Sensor vorzusehen, der geeignet ist, eine Bedingung zu erfassen, bei der eine Bewegung der Arbeitseinrichtung in die Außerbetriebsstellung nicht sinnvoll bzw. nicht möglich ist. Ein derartiger Sensor kann im Falle des Korntanks ein an sich hinreichend bekannter Füllstandssensor sein. Der Sensor ist mit einer Steuerung verbunden, die außerdem mit dem Aktor und der Bedienereingabeeinrichtung verbunden ist. Der Sensor übersendet ggf. ein entsprechendes Signal an die Steuerung, das darauf hinweist, dass eine Betätigung des Aktors nicht sinnvoll ist. Die Steuerung unterbindet, falls sie ein Signal von der Bedienereingabeeinrichtung erhält, das sie anweist, den Aktor in Richtung auf die Außerbetriebsposition zu bewegen, eine Betätigung des Aktors, falls der Sensor ein Signal abgibt, das auf den Eintritt der Bedingung hinweist. Anstelle einer Betätigung des Aktors gibt die Steuerung einen entsprechenden Hinweis an den Bediener, damit er zunächst das Hindernis beseitigen kann, z. B. den Korntank entleeren.

In dem Fall, dass ein Bedienereingabeelement zur Ansteuerung des Aktors sich in einer Position befindet, die einem in der Betriebsposition befindlichen Arbeitselement entspricht, und der Bediener mittels der Bedienereingabeeinrichtung veranlasst, dass der Aktor das Arbeitselement in die Außerbetriebsposition verbringt, ist es sinnvoll, auch das Bedienereingabeelement selbsttätig in eine Position zu verbringen, die einer Außerbetriebsposition des Arbeitselements entspricht. Dadurch verhindert man, dass das Arbeitselement selbsttätig und ungewollt in die Betriebsposition gelangt, sobald der Bediener mit der Bedienereingabeeinrichtung wieder die Arbeitsbetriebsart auswählt.

In den Zeichnungen ist ein nachfolgend näher beschriebenes Ausführungsbeispiel der Erfindung dargestellt. Es zeigt:
- Fig. 1: eine erfindungsgemäße landwirtschaftliche Arbeitsmaschine,
- Fig. 2: ein Schema der Steuerelektronik einiger Arbeitselemente der Arbeitsmaschine aus Figur 1.

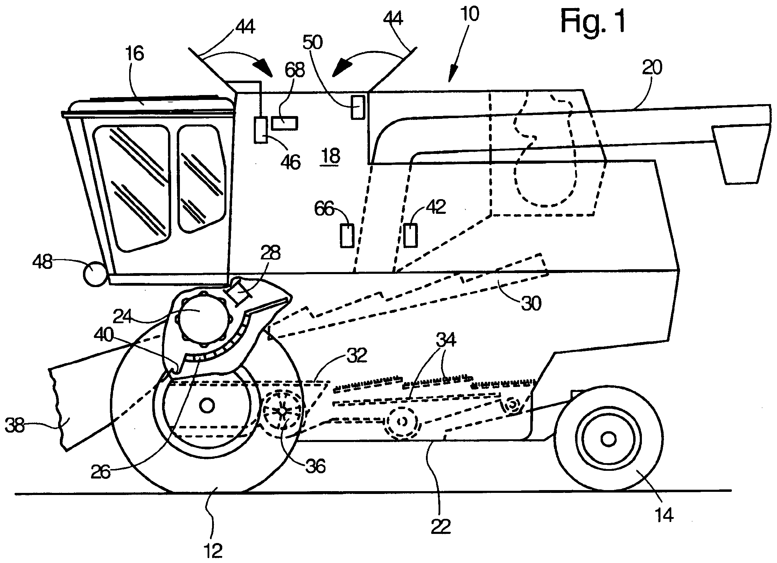

Eine in Figur 1 gezeigte selbstfahrende Arbeitsmaschine 10 in der Form eines Mähdreschers ist auf vorderen angetriebenen und rückwärtigen lenkbaren Mitteln 12 bzw. 14 zum Vortrieb in Form von Rädern getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Korntankentleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Das Korntankentleerrohr 20 ist durch einen ersten Aktor 42 in Form eines Hydraulikmotors um die Hochachse drehbar, so dass es zwischen der in der Figur 1 dargestellten Außerbetriebsposition, in der es sich entlang der Seite der Arbeitsmaschine 10 erstreckt, und einer Betriebsposition, in der es sich bezüglich der Figur 1 senkrecht zur Zeichenebene erstreckt, beweglich ist. In der Betriebsposition kann das Korntankentleerrohr 20 verwendet werden, das im Korntank 18 gespeicherte Korn auf einen Anhänger oder in einen anderen Behälter abzugeben. Dazu befindet sich ein Schneckenförderer innerhalb des Korntankentleerrohrs 20.

An der Oberseite des Korntanks 18 befindet sich eine Korntankabdeckung 44 in Form schwenkbarer Deckelelemente. Die Korntankabdeckung 44 kann durch einen ihr zugeordneten, zweiten Aktor 46 in Form eines Hydraulikzylinders, der durch eine geeignete Mechanik mit der Korntankabdeckung 44 verbunden ist, zwischen einer Betriebsstellung, wie sie in der Figur 1 gezeigt ist und in der die Korntankabdeckung 44 geöffnet ist, um das Fassungsvermögen des Korntanks 18 zu vergrößern, und einer Außerbetriebsstellung bewegt werden, in der die Korntankabdeckung 44 geschlossen und das Innere des Korntanks 18 vor Umwelteinflüssen geschützt ist. Außerdem ist dann die Höhe der Arbeitsmaschine 10 auf die zur Teilnahme am Straßenverkehr zulässige Höhe reduziert. Innerhalb des Korntanks befindet sich ein Sensor 50 für den Füllstand.

Das Korntankentleerrohr 20 und die Korntankabdeckung 44 bilden somit Arbeitseinrichtungen, die durch die zugeordneten Aktoren 42, 46 zwischen einer Betriebsposition zur Arbeit auf einem Feld und einer Außerbetriebsposition zur Fahrt auf einer Straße bewegbar sind.

An der Vorderseite der Fahrerkabine 16 befindet sich eine Beleuchtung 48, die nur bei einer Straßenfahrt in Betrieb zu nehmen ist.

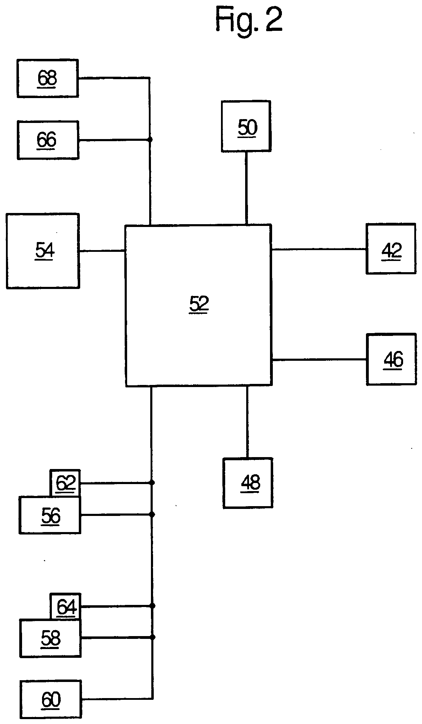

Die Figur 2 zeigt schematisch einen Teil der Steuerelektronik der Arbeitsmaschine 10. Sie umfasst eine Steuerung 52 in Form eines Mikroprozessors o. ä., die über nicht eingezeichnete, elektromagnetische Steuerventile mit den Aktoren 42, 46 verbunden ist. Außerdem ist die Steuerung 52 mit dem Sensor 50 für den Füllstand des Korntanks 18 und der Beleuchtung 48 verbunden. Eine Bedienereingabeeinrichtung 54, ein Schalter 56 zum Verschwenken des Korntankentleerrohrs 20, ein Schalter 58 zum Öffnen und Schließen der Korntankabdeckung 44 sowie ein Schalter 60 für die Beleuchtung 48 sind ebenfalls mit der Steuerung 52 verbunden. Die genannten Verbindungen erfolgen vorzugsweise über ein nicht eingezeichnetes Bussystem.

Die Bedienereingabeeinrichtung 54 ist ein Schalter, der wie die anderen Schalter 56 - 60 in der Fahrerkabine 16 im Griffbereich eines Bedieners angeordnet ist. Die Bedienereingabeeinrichtung ist durch den Bediener manuell in eine Straßenbetriebsartposition und alternativ dazu in eine Arbeitsbetriebsartposition verbringbar. Anstelle eines manuell betätigten Schalters kann jede beliebige andere Form einer Bedienereingabeeinrichtung gewählt werden, wie eine Tastatur, ein berührungssensitiver Bildschirm oder eine Spracheingabeeinrichtung.

Die Steuerung 52 ist derart programmiert, dass die Beleuchtung 48 durch den Schalter 60 nur dann eingeschaltet werden kann, wenn die Bedienereingabeeinrichtung 54 sich in der Straßenbetriebsartposition befindet. Es können noch verschiedene andere Einrichtungen der Arbeitsmaschine 10 vorhanden sein, die durch entsprechende Schalter nur dann in einen Betriebsmodus verbringbar sind, wenn sich die Bedienereingabeeinrichtung 54 sich in der Straßenbetriebsartposition befindet, wie Blinker und dergleichen. Befindet sich die Bedienereingabeeinrichtung 54 in der Arbeitsbetriebsartposition ist die Beleuchtung 48 unabhängig von der Stellung des Schalters 60 ausgeschaltet.

Analog veranlasst die Steuerung 52 nur dann auf eine Betätigung des Schalters 56 ein Verschwenken des Korntankentleerrohrs 20 durch den Aktor 42, wenn sich die Bedienereingabeeinrichtung 54 in der Arbeitsbetriebsartposition befindet. Befindet sich die Bedienereingabeeinrichtung 54 in der Straßenbetriebsartposition ist der Aktor 42 unabhängig von der Stellung des Schalters 60 ausgeschaltet.

Die Steuerung 52 veranlasst weiterhin nur dann auf eine Betätigung des Schalters 58 ein Verschwenken der Korntankabdeckung 44 durch den Aktor 46, wenn sich die Bedienereingabeeinrichtung 54 in der Arbeitsbetriebsartposition befindet. Befindet sich die Bedienereingabeeinrichtung 54 in der Straßenbetriebsartposition ist der Aktor 46 unabhängig von der Stellung des Schalters 58 ausgeschaltet. In der Regel sind noch eine Anzahl anderer Arbeitseinrichtungen vorhanden, die nur dann in Betrieb setzbar sind, wenn sich die Bedienereingabeeinrichtung 54 in der Arbeitsbetriebsartposition befindet, wie beispielsweise die Dreschtrommel 24 und die Schüttler 30.

Die Steuerung 52 ist derart konfiguriert, dass sie nach einem Umschalten der Bedienereingabeeinrichtung 54 aus der Arbeitsbetriebsartposition in die Straßenbetriebsartposition prüft, ob sich das Korntankentleerrohr 20 in seiner Außerbetriebsposition befindet. Ist das nicht der Fall, wird der Aktor 42 selbsttätig aktivert, bis er das Korntankentleerrohr 20 in die Außerbetriebsposition verbracht hat. Dazu ist ein entsprechender Sensor 66 für die Position des Korntankentleerrohrs 20 mit der Steuerung 52 verbunden. Außerdem ist ein elektromechanischer Aktor 62 vorgesehen, der den Schalter 56 dann in die Position verbringt, die der Ruheposition des Korntankentleerrohrs 20 entspricht. Die Stellung des Korntankentleerrohrs 20 kann alternativ oder zusätzlich auch auf einem Bildschirm angezeigt werden, wobei einem Bediener die mit Eingabeelementen zum jeweiligen Zeitpunkt zur Auswahl stehenden Verstellmöglichkeiten angezeigt werden.

Außerdem überprüft die Steuerung 52 nach einem Umschalten der Bedienereingabeeinrichtung 54 aus der Arbeitsbetriebsartposition in die Straßenbetriebsartposition, ob sich die Korntankabdeckung 44 in ihrer Außerbetriebsposition befindet. Ist das nicht der Fall, wird der Sensor 50 abgefragt. Weist dessen Signal darauf hin, dass der Korntank 18 zu weit gefüllt ist, um die Korntankabdeckung 44 problemlos schließen zu können, wird dem Bediener eine entsprechende Information gegeben, beispielsweise durch eine Kontrolllampe oder eine schriftliche oder mündliche Textinformation. Der Bediener kann gegebenenfalls zunächst eine Entleerung des Korntanks 18 durchführen. Weist das Signal des Sensors 50 hingegen darauf hin, dass der Korntank 18 nicht in einem das Schließen der Korntankabdeckung 44 behindernden Maß gefüllt ist, veranlasst die Steuerung 52 den Aktor 46, die Korntankabdeckung 44 zu schließen. Ein Aktor 64 verbringt außerdem den Schalter 58 in die Stellung, die der Außerbetriebsstellung der Korntankabdeckung 44 entspricht. Auch hier ist ein geeigneter Sensor 68 zur Erfassung der Position der Korntankabdeckung 44 vorgesehen und mit der Steuerung 52 verbunden. Die Stellung der Korntankabdeckung 44 kann alternativ oder zusätzlich auch auf einem Bildschirm angezeigt werden, wobei einem Bediener die mit Eingabeelementen derzeit zur Auswahl stehenden Verstellmöglichkeiten angezeigt werden

Die Erfindung ermöglicht im Ergebnis eine selbsttätige Rückstellung der Arbeitseinrichtungen in Form des Korntankentleerrohrs 20 und der Korntankabdeckung 44 in die Außerbetriebsposition, wenn von der Arbeitsbetriebsart in die Straßenbetriebsart übergegangen wird. Dadurch wird die Bedienung der Arbeitsmaschine 10 vereinfacht und die Sicherheit in der Straßenbetriebsart erhöht, da keine Arbeitseinrichtungen versehentlich in der Betriebsposition verbleiben können.

## Patentansprüche

1. Landwirtschaftliche Arbeitsmaschine (10), mit:
Mitteln (12, 14) zum Vortrieb der Arbeitsmaschine (10),
einer Arbeitseinrichtung, die durch einen Aktor (42, 46) zur Arbeit auf einem Gelände in eine Betriebsposition bringbar ist und zur Fahrt auf einer Straße in eine Außerbetriebsposition bringbar ist,
und einer mit einer Steuerung (52) verbundenen Bedienereingabeeinrichtung (54), mit der ein Bediener die Betriebsart der Arbeitsmaschine (10) auswählen kann, wobei ihm zumindest eine Straßenbetriebsart und eine Arbeitsbetriebsart zur Verfügung stehen
und die Steuerung (52) derart programmiert ist, dass Einrichtungen der Arbeitsmaschine (10), wie Beleuchtungen (48), die nur bei einer Straßenfahrt benötigt werden, nur bei ausgewählter Straßenbetriebsart in einen Betriebsmodus verbringbar sind, während die Arbeitseinrichtung, die nur bei der Arbeit benötigt wird, nur bei ausgewählter Arbeitsbetriebsart in einen Betriebsmodus verbringbar ist,
und die Steuerung (52) betreibbar ist, zu überprüfen, ob sich die Arbeitseinrichtung in der Außerbetriebsposition befindet, wenn mit der Bedienereingabeeinrichtung (54) ein Übergang von der Arbeitsbetriebsart in die Straßenbetriebsart ausgewählt wird, und in Abhängigkeit vom Ergebnis der Überprüfung einen Signalwert zu erzeugen,
**dadurch gekennzeichnet, dass** die Steuerung betreibbar ist, einem Bediener ein Signal zu geben, wenn mit der Bedienereingabeeinrichtung (54) ein Übergang von der Arbeitsbetriebsart in die Straßenbetriebsart ausgewählt wird und sich die Arbeitseinrichtung nicht in der Außerbetriebsposition befindet, und/oder den Aktor (42, 46) dann zu veranlassen, die Arbeitseinrichtung selbsttätig in die Außerbetriebsposition zu verbringen,
dass ein Sensor (50) mit der Steuerung (52) verbunden ist, der eingerichtet ist, eine Bedingung zu erfassen, bei der ein Verbringen der Arbeitseinrichtung in die Außerbetriebsstellung nicht angebracht ist, und dass die Steuerung (52) bei Erhalt eines Signals des Sensors (50), das auf einen Eintritt der Bedingung hinweist, den Aktor (46) nicht veranlasst, die Arbeitseinrichtung in die Außerbetriebsstellung zu verbringen, wenn mit der Bedienereingabeeinrichtung (54) ein Übergang von der Arbeitsbetriebsart in die Straßenbetriebsart ausgewählt wird, sondern einen entsprechenden Hinweis an den Bediener gibt.

2. Arbeitsmaschine (10) nach Anspruch 1, **dadurch gekennzeichnet, dass** sie eine selbstfahrende Erntemaschine ist.

3. Arbeitsmaschine nach Anspruch 2, **dadurch gekennzeichnet, dass** die Arbeitseinrichtung zum Handhaben von Erntegut vorgesehen ist.

4. Arbeitsmaschine (10) nach Anspruch 3, **dadurch gekennzeichnet, dass** sie ein Mähdrescher ist und dass die Arbeitseinrichtung ein Korntankentleerrohr (20) und/oder eine Korntankabdeckung (44) und/oder eine zur Hangarbeit verstellbare Radanordnung und/oder einen Erntevorsatz mit verschwenkbaren Elementen umfasst.

5. Arbeitsmaschine nach Anspruch 3, **dadurch gekennzeichnet, dass** sie ein Feldhäcksler ist und dass die Arbeitseinrichtung eine Austrageinrichtung und/oder einen Erntevorsatz mit verschwenkbaren Elementen umfasst.

6. Arbeitsmaschine (10) nach einem der Ansprüche 1 bis 5, **dadurch gekennzeichnet, dass** die Arbeitseinrichtung durch ein Bedienereingabeelement (56, 58) steuerbar ist, und dass das Bedienerelement (56, 58) selbsttätig in die Außerbetriebsstellung gebracht wird, wenn mit der Bedienereingabeeinrichtung (54) ein Übergang von der Arbeitsbetriebsart in die Straßenbetriebsart ausgewählt wird.

## Claims

1. Agricultural working machine (10), having:
means (12, 14) for propelling the working machine (10),
a working device which can be moved into an operating position by an actuator (42, 46) for working off-road and can be moved into a non-operational position for travelling on a road,
and an operator control input device (54) which is connected to a controller (52) and with which an operator can select the operating mode of the working machine (10), wherein at least one road operating mode and one working operating mode are available to said operator,
and the controller (52) is programmed in such a way that devices of the working machine (10), such as lighting systems (48) which are required only when travelling on a road, can be changed into an operational mode only when the road operating mode is selected, while the working device, which is required only during work, can be changed into an operational mode only when the working operating mode is selected,
and the controller (52) can be operated to check whether the working device is in the non-operational position when a changeover from the working operating mode into the road operating mode is selected with the operator control input device (54), and to generate a signal value as a function of the result of the check,
**characterized in that** the controller can be operated to provide an operator with a signal if a changeover from the working operating mode into the road operating mode is selected with the operator control input device (54) and the working device is not in the non-operational position, and/or to cause the actuator (42, 46) to change the working device automatically into the non-operational position,
that a sensor (50) is connected to the controller (52) and is configured to detect a condition under which it is not suitable to move the working device into the non-operational position, and **in that**, when a signal of the sensor (50) which indicates occurrence of the condition is received, the controller (52) does not make the actuator (46) change the working device into the non-operational position if a changeover from the working operating mode into the road operating mode is selected with the operator control input device (54), but gives a corresponding hint to the operator.

2. Working machine (10) according to Claim 1, **characterized in that** said working machine (10) is an automotive harvesting machine.

3. Working machine according to Claim 2, **characterized in that** the working device is provided for handling harvested material.

4. Working machine (10) according to Claim 3, **characterized in that** said working machine is a combine harvester, and **in that** the working device comprises a grain tank emptying tube (20) and/or a grain tank cover (44) and/or a wheel arrangement which can be adjusted for operation on a slope and/or a harvesting attachment with pivotable elements.

5. Working machine according to Claim 3, **characterized in that** it is a forage harvester, and **in that** the working device comprises a discharge device and/or a harvesting attachment with pivotable elements.

6. Working machine (10) according to one of Claims 1 to 5, **characterized in that** the working device can be controlled by an operator control input element (56, 58), and **in that** the operator control element (56, 58) is moved automatically into the non-operational position if a changeover from the working operating mode into the road operating mode is selected with the operator control input device (54).

## Revendications

1. Machine de travail agricole (10) présentant :
des moyens (12, 14) permettant l'avancement de l'machine de travail (10),
un dispositif de travail qui peut être amené par un actionneur (42, 46) dans une position de fonctionnement pour travailler sur un terrain et qui peut être amené dans une position de non fonctionnement en vue d'un déplacement sur une chaussée et
un dispositif (54) de commande de fonctionnement relié à une commande (52) et avec lequel un opérateur peut sélectionner le mode de fonctionnement de l'machine de travail (10), l'opérateur disposant au moins d'un mode de fonctionnement sur chaussée et d'un mode de fonctionnement de travail,
la commande (52) étant programmée de telle sorte que des dispositifs de l'machine de travail (10) tels que des phares (48) qui ne sont nécessaires que lors d'un déplacement sur chaussée ne puissent être amené en mode de fonctionnement que lorsque le mode de fonctionnement sur chaussée a été sélectionné, tandis que le dispositif de travail qui n'est nécessaire que lors du travail ne peut être amené en mode de fonctionnement que lorsque le mode de fonctionnement de travail a été sélectionné et
la commande (52) pouvant être actionnée pour vérifier si le dispositif de travail se trouve en position de non fonctionnement lorsqu'une transition depuis le mode de fonctionnement de travail vers le mode de fonctionnement sur chaussée a été sélectionnée à l'aide du dispositif (54) de commande de fonctionnement et pour former une valeur de signal en fonction du résultat de la vérification,
**caractérisé en ce que**
la commande peut être actionnée pour délivrer à l'opérateur un signal lorsqu'une transition depuis le mode de fonctionnement de travail jusque dans le mode de fonctionnement sur chaussée a été sélectionné à l'aide du dispositif (54) de commande de fonctionnement et que le dispositif de travail ne se trouve pas dans la position de non fonctionnement et/ou pour permettre à l'actionneur (42, 46) d'amener automatiquement le dispositif de travail dans la position de non fonctionnement,
**en ce qu'**un capteur (50) conçu pour saisir une condition dans laquelle l'amenée du dispositif de travail en position de non fonctionnement ne convient pas est relié à la commande (52) et **en ce que** lorsque la commande (52) reçoit du capteur (50) un signal qui indique l'intervention de la condition, elle ne permet pas à l'actionneur (46) d'amener le dispositif de travail en position de non fonctionnement si une transition du mode de fonctionnement de travail dans le mode de fonctionnement sur chaussée a été sélectionné à l'aide du dispositif (54) de commande de fonctionnement, mais donne un avis correspondant au operateur.

2. Machine de travail (10) selon la revendication 1, **caractérisé en ce qu'**il est une récolteuse autotractée.

3. Machine de travail selon la revendication 2, **caractérisé en ce que** le dispositif de travail est prévu pour manipuler un produit de récolte.

4. Machine de travail (10) selon la revendication 3, **caractérisé en ce qu'**il est une moissonneuse-batteuse et **en ce que** le dispositif de travail comporte un tube (20) de vidage de cuve à grains, un couvercle (44) de cuve à grains, un ensemble de roue ajustable pour travail suspendu et/ou un appendice de récolte doté d'éléments pivotants.

5. Machine de travail selon la revendication 3, **caractérisé en ce qu'**il est une ramasseuse-hacheuse et **en ce que** le dispositif de travail comporte un dispositif d'extraction et/ou un appendice de récolte doté d'éléments pivotants.

6. Machine de travail (10) selon l'une des revendications 1 à 5, **caractérisé en ce que** le dispositif de travail peut être commandé par un élément de commande (56, 58) et **en ce que** l'élément de commande (56, 58) est amené automatiquement en position de non fonctionnement si une transition du mode de fonctionnement de travail dans le mode de fonctionnement sur chaussée a été sélectionné à l'aide du dispositif (54) de commande de fonctionnement.
